# EUROPÄISCHE PATENTSCHRIFT

(11) **EP 0 430 111 B1**
(45) Veröffentlichungstag und Bekanntmachung des Hinweises auf die Patenterteilung: **14.06.1995**
(21) Anmeldenummer: 90122440.2
(22) Anmeldetag: 24.11.1990
(51) Int. Cl.: G01N 21/41, G01F 23/28

(54) **Optischer Sensor**
Optical sensor
Senseur optique

(30) Priorität: 27.11.1989 DE 3939167
(43) Veröffentlichungstag der Anmeldung: 05.06.1991
(73) Patentinhaber: Fibronix Sensoren GmbH, D-24143 Kiel (DE)
(72) Erfinder: Eisele, Ronald, Dipl.-Phys., W-2307 Dänisch-Nienhof (DE); Flieger, Klaus, Dipl.-Ing., W-2314 Lilienthal (DE); Liehr, Manfred, W-2000 Hamburg (DE)
(74) Vertreter: Patentanwälte Westphal, Buchner, Mussgnug Neunert, Göhring

(56) Entgegenhaltungen:
- DE-A- 2 505 485
- DE-A- 2 824 807
- PATENT ABSTRACTS OF JAPAN vol. 6, no. 209 (P-150)(1087) 21. Oktober 1982 & JP-A-57 114 823
- PATENT ABSTRACTS OF JAPAN vol. 7, no. 101 (P-194)(1246) 28. April 1983 & JP-A-58 026 226

## Beschreibung

Die Erfindung betrifft einen optischen Sensor der im Oberbegriff des Anspruchs 1 genannten Art.

Derartige Sensoren, die z.B. aus Patent Abstracts of Japan, vol. 6, no. 209, Seite 150 bekannt sind und der Detektion von Flüssigkeiten dienen, sind z. B. oberhalb eines Flüssigkeitsspiegels angeordnet und erzeugen ein Signal, wenn sie mit ihrer optischen Grenzfläche mit dem Flüssigkeitsspiegel in Berührung kommen. Da der Brechungsindex der Flüssigkeit ein anderer ist als der umgebenden Luft, ändern sich die Reflexionseigenschaften der optischen Grenzfläche für das in den Sensorkörper eingekoppelte Licht. Die Anordnung kann hierbei derart sein, daß die optische Grenzfläche das Licht total reflektiert, wenn sie sich außerhalb der Flüssigkeit befindet, während bei Eintauchen in die Flüssigkeit das Licht ganz oder teilweise passiert. Dieses eindeutige Kriterium kann zur Feststellung eines Flüssigkeitgrenzstandes ausgenutzt werden.

Dieses Kriterium stellt sich nicht ein oder wird verfälscht, wenn die optische Grenzfläche durch eine Flüssigkeit benetzt ist, ehe sie in den Flüssigkeitsspiegel eintaucht. Das kann dann der Fall sein, wenn oberhalb des Flüssigkeitsspiegels eine dampfgesättigte Atmosphäre herrscht, die zur Tropfenbildung auf der Grenzfläche führt.

Darüber hinaus ist aus DE-A 2 505 485 eine Vorrichtung bekannt, mit der ein Lichtleiterstab in einem Temperaturausgleichskörper gehalten wird, wobei zwischen Lichtleiterstab und dem Temperaturausgleichskörper ein Ringspalt vorgesehen ist. In diesem Ringspalt soll Kondensatflüssigkeit durch Kapillarwirkung gehalten werden. Ein optischer Sensor ist somit in diesem Dokument nicht beschrieben.

Der vorliegenden Erfindung liegt die Aufgabe zugrunde, Maßnahmen zu treffen, welche diese Tropfenbildung verhindern, um die Signalverfälschung oder Beeinflussung zu vermeiden oder zumindest zu reduzieren.

Gelöst wird diese Aufgabe durch einen optischen Sensor, der die Merkmale des Patentanspruchs 1 aufweist.

Dieser Kapillare oder Poren aufweisende Saugkörper muß so ausgewählt und dimensioniert sein, daß seine Kapillarkraft größer ist als die auf die Flüssigkeitsschicht an der Grenzfläche wirkende Oberflächenspannung.

Für einen aus Glas bestehenden Sensorkörper eignet sich nach dem Vorschlag gemäß Anspruch 3 ein aus gesinteter Glasfritte bestehender Saugkörper.

Auch kann der Saugkörper ein oder mehrere Kapillarröhrchen aufweisen, wie dies mit Anspruch 4 angegeben ist.

Soweit die Grenzfläche des Sensorkörpers eine nach unten weisende Strukturspitze aufweist, wie dies z. B. bei den Sensoren nach Anspruch 6 der Fall ist, ist der Saugkörper zeckmäßigerweise gemäß Anspruch 2 vor oder unter der Strukturspitze angeordnet.

Die verglichen mit den Grenzflächen schlank ausgebildeten Saugkörper nehmen die die Grenzfläche benetzende Flüssigkeit auf und führen diese an ihren von den Grenzflächen entfernten, vorzugsweise verjüngten Ende tropfenförmig ab.

Grundsätzlich können die erfindungsgemäßen Vorschläge zur Tropfenverhinderung überall dort angewandt werden, wo Flächen frei von einer diese benetzende Flüssigkeitsschicht gehalten werden müssen.

Der Gegenstand der Erfindung ist nachstehend anhand der schematischen Darstellung veranschaulicht. In den Figuren zeigen:
- Fig. 1: Seitenansicht eines herkömmlichen Sensorkopfes mit schematischer Darstellung der Lichtströme und der Tropfenbildung,
- Fig. 2: Sensorkörper nach Fig. 1 mit aus porösem Material bestehendem Saugkörper
- Fig. 3: Sensorkörper gemäß Fig. 1 mit Kapillarrohr und
- Fig. 4: Sensorkörper gemäß Fig. 1 mit einem mehrere Kapillare aufweisenden Saugrohr.

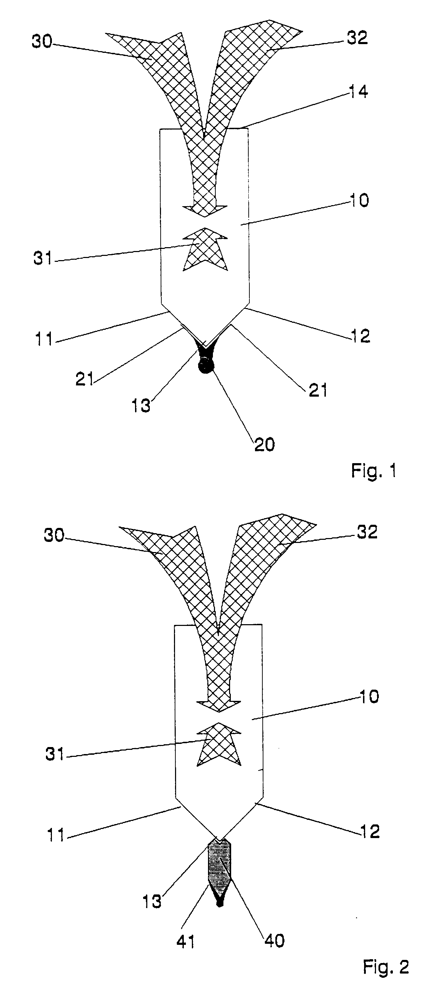

Anhand der Darstellung gemäß Fig. 1, welche einen bekannten optischen Sensor zeigt, ist zunächst die grundsätzliche Problematik erläutert.

Der Sensor besteht im wesentlichen aus einem lichtdurchlässigen Sensorkörper 10 aus Glas oder Kunstglas. Über die Koppelfläche 14 wird von einer nicht dargestellten Lichtquelle erzeugtes und vorzugsweise mit einem Lichtleiter zugeführtes Licht 30 eingekoppelt. Dieses Licht wird an den optischen Grenzflächen 11, 12 reflektiert, was mit dem Pfeil 31 angedeutet ist. Bei 32 tritt das Licht aus und wird einem nicht dargestellten Detektor zugeführt. Die optischen Grenzflächen 11 und 12 sind hierbei so angeordnet, daß eine Totalreflexion stattfindet, wenn sich der Sensorkörper 10 in einer gasförmigen Atmosphäre, vorzugsweise in Luft, befindet. Taucht dagegen der Sensorkörper 10 mit seinen Grenzflächen 11 und 12 in ein flüssiges Medium ein, so ändert sich der Brechwinkel mit der Folge, daß ein Teil des auf die optischen Grenzflächen 11 und 12 auftreffenden Lichtes durch diese hindurchtritt und ein geringerer zum Detektor 32 reflektiert wird. Dieser Effekt kann folglich zur Grenzstandsfeststellung von Flüssigkeiten ausgenutzt werden.

Eine Signalverfälschung ergibt sich jedoch, wenn sich auf den Grenzflächen 11, 12 eine Flüssigkeitsschicht 21 niederschlägt und Tropfen 20 gebildet werden. Diese störende Benetzung stellt sich ein, wenn sich der Sensorkörper 10 in einer dampfgesättigten Atmosphäre befindet, die oberhalb des zu kontrollierenden Flüssigkeitsspiegels entstehen kann.

Dieser Effekt wird vermieden, wenn im Bereich der Strukturspitze 13 ein Saugkörper angeordnet ist.

Bei dem Ausführungsbeispiel gemäß Fig. 2 besteht dieser Saugkörper 40, der unterhalb der Strukturspitze 13 mit geringerem Abstand angeordnet ist, aus porösem Material, nämlich gesinterter Glasfritte. Die auf die sich niederschlagende Flüssigkeit wirkenden Kapillarkräfte der Saugkörperporen sind größer als die entgegenwirkende Oberflächenspannung, was zur Folge hat, daß die Grenzflächen 11 und 12 nicht von einer Flüssigkeitsschicht benetzt werden. Diese Flüssigkeitsschicht wird in Form von Tropfen 20 an dem verjüngten Ende 41 des Saugkörpers 40 abgegeben.

Der Saugkörper 40 hat, verglichen mit den Grenzflächen 11 und 12, einen kleinen Querschnitt, so daß der Lichtdurchtritt durch die Grenzflächen 11 und 12 nicht wesentlich eingeschränkt wird.

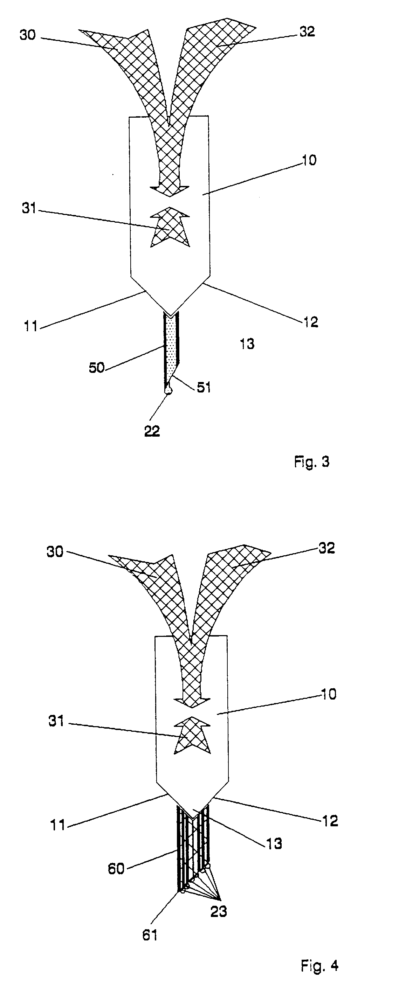

Bei dem Ausführungsbeispiel gemäß Fig. 3 dient ein Kapillarrohr 50 als Saugkörper. Die über die Kapillare aufgenommene Flüssigkeit wird auch bei dieser Anordnung in Form von Tropfen 22 an dem verjüngten Ende 51 abgegeben.

Eine dritte Abwandlung dieses Vorschlages ist mit Fig. 4 veranschaulicht, bei welcher der Saugkörper aus einem Rohr 60 besteht, das mehrere, parallel zueinander verlaufende röhrchen- oder spaltenförmige Kapillare besitzt, an deren Ende bei 61 gleichfalls die aufgenommene Flüssigkeit in Form von Tropfen 23 abgegeben wird.

### FIGURENLEGENDE

- 10: Sensor-Körper
- 11, 12: optische Grenzflächen
- 13: Strukturspitze
- 14: Koppelfläche

- 20: Tropfen
- 21: Flüssigkeitsschicht
- 22, 23: Tropfen
- 30: eingekoppeltes Licht
- 31: reflektiertes Licht
- 32: ausgekoppeltes Licht
- 40: poröser Saugkörper
- 41: verjüngtes Ende
- 50: Kapillarrohr
- 51: verjüngtes Ende
- 60: Rohr mit mehreren Kapillaren
- 61: verjüngtes Ende

## Patentansprüche

1. Optischer Sensor, bestehend aus einem lichtdurchlässigen Sensorkörper mit wenigstens einer nach unten weisenden optischen Grenzfläche, die von außen von einer Flüssigkeit benetzbar ist und welche je nach Benetzung in den Sensorkörper eingekoppeltes Licht totalreflektiert bzw. ganz oder teilweise passieren läßt, dadurch gekennzeichnet, daß auf der Außenseite der nach unten weisenden Grenzfläche (11, 12) ein den Lichtdurchtritt nur wenig oder nicht behindernder, Poren oder Kapillare aufweisender Saugkörper (40, 50, 60) vorgesehen ist, dessen Kapillarkraft größer ist als die die Flüssigkeitsschicht (21) an der Grenzfläche (11, 12) haltende Oberflächenspannung.

2. Sensor nach Anspruch 1, dessen Grenzfläche eine nach unten weisende Strukturspitze aufweist, dadurch gekennzeichnet, daß der Saugkörper (40, 50, 60) vor oder unter der Strukturspitze (13) angeordnet ist.

3. Sensor nach Anspruch 1 oder 2, dadurch gekennzeichnet, daß der Saugkörper (40) aus porösem Material, vorzugsweise gesinterter Glasfritte, besteht.

4. Sensor nach Anspruch 1 oder 2, dadurch gekennzeichnet, daß der Saugkörper (50, 60) ein oder mehrere, Kapillarröhrchen aufweist.

5. Sensor nach einem der Ansprüche 1 bis 4, dadurch gekennzeichnet, daß sich der Saugkörper (40, 50, 60) an seinem von der Grenzfläche (11, 12) abgewandten Ende (41, 51, 61) verjüngt.

6. Sensor nach einem der Ansprüche 1 bis 5, dadurch gekennzeichnet, daß die Grenzflächen (11, 12) prismatisch bzw. kegelförmig ausgebildet sind.

## Claims

1. An optical sensor, consisting of a transparent sensor member having at least one downwardly pointing optical interface, which can be wetted from outside by liquid and which allows light focused into the sensor member to be totally reflected or after wetting completely or partially to pass respectively,
**characterised in that** a suction member (40, 50, 60), which only slightly hinders or does not hinder the passage of light and comprises pores or capillaries, is provided on the outside of the downwardly pointing interface (11, 12), the capillary force of which is greater than the surface tension keeping the layer of liquid (21) at the interface (11, 12).

2. A sensor according to Claim 1, the interface of which comprises a downwardly pointing structural tip,
**characterised in that** the suction member (40, 50, 60) is disposed in front of or beneath the structural tip (13).

3. A sensor according to Claim 1 or 2,
**characterised in that** the suction member (40) is made of porous material, preferably sintered glass frit.

4. A sensor according to Claim 1 or 2,
**characterised in that** the suction member (50, 60) comprises one or more capillary tubes.

5. A sensor according to one of Claims 1 to 4,
**characterised in that** the suction member (40, 50, 60) tapers at its end (41, 51, 61) remote from the interface (11, 12).

6. A sensor according to one of Claims 1 to 5,
**characterised in that** the interfaces (11, 12) are constructed prismatically or conically.

## Revendications

1. Capteur optique composé d'un élément de capteur transparent à, la lumière avec au moins un interface optique tourné vers le bas, qui peut être mouillé extérieurement par un liquide et, après mouillage, réfléchit totalement la lumière injectée dans cet élément de capteur, c'est-à-dire la laisse passer totalement ou partiellement, caractérisé en ce que la face extérieure de l'interface (11, 12), tournée vers le bas, comporte un élément absorbant (40, 50, 60) muni de pores ou de conduits capillaires et qui ne gêne pas ou peu le passage de la lumière, et dont l'effet capillaire est supérieur à la tension de surface qui accroche la couche de liquide (21) à l'interface (11, 12).

2. Capteur selon la revendication 1 dont l'interface a une pointe de structure tournée vers le bas, caractérisé en ce que l'élément absorbant (40, 50, 60) se trouve devant ou en dessous de la pointe de structure (13).

3. Capteur selon la revendication 1 ou 2, caractérisé en ce que l'élément absorbant (40) est en un matériau poreux, de préférence une composition de matières vitrifiables frittées.

4. Capteur selon la revendication 1 ou 2, caractérisé en ce que l'élément absorbant (50, 60) comporte un ou plusieurs conduits capillaires.

5. Capteur selon l'une des revendications 1 à 4, caractérisé en ce que l'élément absorbant (40, 50, 60) est rétréci à son extrémité (41, 51, 61) opposée à celle de l'interface (11, 12).

6. Capteur selon l'une des revendications 1 à 5, caractérisé en ce que les interfaces (11, 12) sont de forme prismatique ou conique.
